# EUROPÄISCHE PATENTSCHRIFT

(11) **EP 1 286 096 B1**
(45) Veröffentlichungstag und Bekanntmachung des Hinweises auf die Patenterteilung: **11.04.2007**
(21) Anmeldenummer: 02015661.8
(22) Anmeldetag: 17.07.2002
(51) Int. Cl.: F16L 11/15

(54) **Kunststoffkorrugationswellrohr mit monolithischem Behältnis**
Corrugated plastic pipe with monolithic container
Tuyau ondulé en plastique à conteneur monolithique

(30) Priorität: 14.08.2001 DE 20113499 U
(43) Veröffentlichungstag der Anmeldung: 26.02.2003
(73) Patentinhaber: Fränkische Rohrwerke Gebr. Kirchner GmbH + Co KG, 97486 Königsberg/Bayern (DE)
(72) Erfinder: Büttner, Matthias, 97486 Königsberg (DE); Krauß, Manfred, 97265 Hettstadt (DE); Käb, Rainer, 97486 Königsberg (DE)
(74) Vertreter: Schwabe - Sandmair - Marx

(56) Entgegenhaltungen:
- DE-A- 19 531 245
- DE-A- 19 725 051
- DE-A- 19 912 351
- FR-A- 2 576 876
- US-A- 4 492 324
- US-A- 4 927 191
- US-A- 5 882 048

## Beschreibung

Die Erfindung betrifft eine einstückige Kunststoffkorrugationswellrohr-Behälter-Anordnung mit Wellenbergen und Wellentälern gemäß einem der Ansprüche 1 oder 10 sowie ein Verfahren nach Anspruch 21 zur Herstellung eines derartigen Behälters.

Im Stand der Technik ist es bei diversen Einsatzbereichen bekannt, Schläuche oder Kunststoffwellrohre bzw. Kunststoffkorrugationswellrohre mit Ausgleichsbehältern zu verbinden, etwa um Siebe einbauen zu können, um Fremdkörper aus einem Flüssigkeitsstrom zu sieben bzw. zum Sammeln von Kondenswasser oder dgl. mehr. Auch werden derartige Behälter an Wellrohre angeschlossen, um einen Zwischenspeicher für Flüssigkeiten zu schaffen. Auch werden sie zur Veränderung des Volumenstromes bei unterschiedlichen Rohrquerschnitten eingesetzt, wenn etwa eine Flüssigkeit beschleunigt oder abgebremst werden soll. Ferner werden derartige Behälter als Übergangsbehälter oder Füllbehälter an Kunststoffwellrohre angeschlossen. Zusätzlich sind solche Behälter im Automobilbereich von Nutzen, beispielsweise als Vorratsbehälter oder Ausgleichsbehälter für Bremsflüssigkeit, für Motoröl, oder diverse andere Flüssigkeiten, die z.B. aufgrund einer Temperaturausdehnung aufgenommen werden müssen, bzw. die ganz einfach gespeichert werden müssen, um im Bedarfsfalle zur Verfügung zu stehen.

Bei all diesen Einsatzbereichen ist es gegenwärtig erforderlich, entsprechende Behälter als Spritzgussteile herzustellen, und über Schlauchschellen, Fittinge oder dgl. Wellrohre aus Kunststoff anzuschließen.

Die FR 2 576 876 bezieht sich auf einen elastischen zusammenklappbaren Behälter, der es seinem Anwender ermöglicht, den Inhalt zu sehen, um den gesamten Inhalt ohne Hilfe eines Löffels oder einer Gabel aufzunehmen und zu verbrauchen. Er wird durch einen Körper gebildet, der mit Übergangsbalgfalten, einem oberen Abschnitt, der ein Gelenkrohr mit Übergangsbalgfalten und eine vorgestanzte Einrichtung aufweist, und einem Boden ausgestattet ist, dessen Form gestaltet ist, um vollkommen dem oberen Teil des Behälters in der zusammengeklappten Position zu entsprechen.

Es ist dementsprechend eine Aufgabe gemäß der Erfindung, den oben aufgeführten Nachteilen im Stand der Technik soweit als möglich Abhilfe zu verschaffen. Insbesondere soll ein Gegenstand zur Verfügung gestellt werden, der den bisherigen Installationsaufwand und die bisherige Teilevielfalt verringern hilft.

Die DE 199 12 351 A1 offenbart eine Anschlussleitung mit einem oder mehreren gewellten und glattwandigen Abschnitten. Diese Anschlussleitung wird über spezielle Anschlussstücke beispielsweise an einen Behälter ankoppeln. Die Anschlussstücke enthalten ein dichtendes Wandungsmaterial und sollen weitere Dichtungsmittel erübrigen.

Die DE 195 31 245 A1 zeigt ein Wellrohr mit in vorgebbaren Abständen wiederholt vorgesehenen Muffenabschnitten. Wird ein Rohrabschnitt bestimmter Länge benötigt, wird ein bei einer entsprechenden Länge vorgesehener Muffenabschnitt mittig durchbrennt um den gewünschten Rohrabschnitt zu ergeben, um so mit einem Rohr mehrere Rohrlängen variabel zu verwirklichen.

Gemäß der Erfindung ist die Lösung in den Merkmalen der unabhängigen Ansprüche 1, 10 und 21 aufgeführt.

Anordnungen gemäß der Erfindung werden mittels eines Korrugators hergestellt, in dessen Formungsstrecke in endlos umlaufenden Formungsketten umlaufende Halbformen zu einem geschlossenen Formkanal zusammengeführt werden. Ein weichplastisch verformbarer Kunststoffschlauch wird in den Formkanal eingeführt, um ein Kunststoffkorrugationswellrohr herzustellen, wobei dieses integral bzw. monolithisch mit dem erfindungsgemäß vorzusehenden Behälter ausgestattet wird. D.h., der Behälter wird einstückig mit dem Kunststoffrohr mittels eines Korrugationsprozesses hergestellt.

Zwischen dem Behälter und dem Wellrohr ist ein monolithisch bzw. integral aus Kunststoff mitgeformter Übergangsabschnitt vorgesehen, der den Wellrohrquerschnitt in den Behälterquerschnitt überführt. Eine derartige Ausbildung gewährleistet, dass ohne einen Verlust an Wandungsstärke der Behälter in das Wellrohr, und umgekehrt, überführt werden kann. Dabei ist noch zu berücksichtigen, dass bei der Herstellung des Behälters, insofern dieser einen größeren Außenumfang hat, zur Gewährleistung einer gleichmäßigen Wandstärke, der Korrugationsprozess langsamer gefahren wird. D.h., pro Flächeneinheit der Behälterwandung wird bei einem größeren Durchmesser des Behälters mehr Kunststoffmaterial angeboten, als dies zur Ausbildung des Wellrohres erforderlich ist. Natürlich kann auch der Extruder mit einer größeren Materialmenge gefahren werden bzw. bereichsweise kann eine zusätzliche Kunststoffschicht durch Coextrusion angeboten werden, um mehr Material im Bereich des Behälters für den Korrugationsprozess anzubieten.

Gemäß der Erfindung kann damit eine Anordnung mit einem Kunstoffkorrugatyionswellrohr mit monolithisch bzw. integral vorgesehenem Behälter zur Verfügung gestellt werden, bei dem zwischen dem Be-halter und dem Kunststoffkorrugationswellrohr keine Stoß- bzw. Dichtflächen auftreten, so dass einerseits wegen der zu erübrigenden Überdeckung des Wellrohres mit dem Behälter Material eingespart werden kann und andererseits keine Dichtigkeitsprobleme auftreten. Ferner werden auch keine Befestigungselemente wie Schlauchschellen, Flanschschellen oder dg1. benötigt und auch Dichtelemente wie O-Ringe lassen sich einsparen.

Der Behälter ist gemäß einem Aspekt der Erfindung wenigstens teilweise mit einer starren Wand ausgebildet. Einsatzabhängig kann der Behälter natürlich auch wenigstens teilweise balgartig bzw. wellrohrartig ausgebildet werden. Abhängig davon, ob der Behälter beispielsweise als Ausgleichsbehälter mit variablem Volumen ausgelegt werden soll, kann die Wandung bzw. kann der Behälter mit einer eher flexiblen, d.h. wenigstens teilweise balgartigen bzw. wellrohrartigen Wandung ausgebildet werden.

Entsprechend kann, falls beispielsweise eine Druckentlastung oder eine Drucksteigerung gewünscht ist, auch eine Einschnürung im Übergangsabschnitt zwischen dem Behälter und dem Kunststoffkorrugationswellrohr gemäß der Erfindung vorgesehen sein. Im Innenbereich kann der Übergangsabschnitt auch mit einer Dichtfläche ausgebildet werden, an die beispielsweise ein Dichtteller zur Anlage bringbar ist, so dass der Bereich zwischen dem Wellrohr und dem Behälter zugleich mittels eines einfachen Kunststoffventiltellers zu einem Dichtventil ergänzt werden kann.

Für bestimmte Anwendungen, wenn beispielsweise der Behälter an irgendwelche Geräteabschnitte angeschlossen werden soll, kann der Behälter einseitig offen ausgebildet sein. Um dabei eine Dichtigkeit des Anschlussbereiches gewährleisten zu können, kann der Behälter nahe der damit verbundenen Öffnung wenigstens eine nutartige Struktur erhalten, um eine Dichteinrichtung, etwa einen O-Ring aufzunehmen.

Um eine vorteilhafte Befestigung des Erfindungsgegenstandes über dessen Behälter an einem Gerät, einem Abfluss, einem Wasserzulauf, oder dgl., zu ermöglichen, können Befestigungsabschnitte integral in den Behälter eingeformt sein. Auch diese können durch den Korrugationsprozess hergestellt werden. So lassen sich beispielsweise Rastabschnitte in der Form von etwa Rastnocken, Rastnasen oder dgl., anordnen.

Entsprechend einer anderen Anschlusstechnik kann der Behälter auch an seiner offenen Seite mit einem Stutzen- bzw. Flanschabschnitt versehen werden, um etwa das Anflanschen an einen Ablauf oder dgl. zu ermöglichen. So kann beispielsweise ein derartiger Flansch leicht an einen Abfluss mittels einer Flanschschelle angeflanscht werden, wobei in den Behälter ein Sieb eingelegt sein kann, um die Leitung verstopfende Bestandteile nicht in die Leitung gelangen zu lassen. Durch den erhöhten Querschnitt im Siebbereich hat eine so abgesicherte Leitung eine wesentlich höhere Standzeit, bevor das Sieb gereinigt werden muss.

Für bestimmte Anwendungen kann vorteilhafterweise auf beiden Seiten des Behälters ein Kunststoffkorrugationswellrohr vorgesehen sein. Auch hier sind keinerlei Dichtmassen erforderlich, da die gesamte Struktur monolithisch bzw. integral hergestellt werden kann.

Dabei kann das Wellrohr auf einer Seite des Behälters mit einer anderen Querschnittsform, Wellungsform und/oder Wanddicke ausgebildet sein, als auf der anderen Seite. Auf diese Weise lassen sich unterschiedlichste Anforderungen erfüllen und die erfindungsgemäße Struktur kann auch als Adapter zum Einsatz kommen

Ferner ist es möglich, dass der Behälter mit mehreren Abschnitten ausgebildet wird, die unterschiedliche Querschnitte aufweisen, unterschiedlich lang sind und auch mit unterschiedlichen Wandstärken ausgebildet sein können. Dies kann beispielsweise von Vorteil sein, wenn beengte Platzverhältnisse vollkommen ausgenutzt werden sollen. Hier lässt sich beispielsweise in einem kompakten Motorraum ein Vorratsbehälter oder ein Druckausgleichsbehälter oder dgl. mit optimierter Größe installieren, derart, dass Zwischenräume weitestgehend ausgenutzt werden können. Dementsprechend kann die Raumausnutzung auch andernorts, etwa in Küchengeräten, Spülmaschinen, Waschmaschinen oder dgl. ebenfalls optimiert werden.

Insbesondere für den Fall, dass der Erfindungsgegenstand in Verbindung mit leicht flüchtigen bzw. diffusiven Stoffen eingesetzt wird, bspw. Kraftstoffen bei Kraftfahrzeugen, kann die Wandung des Wellrohres und/oder des Behälters mehrschichtig, eventuell mit einer Diffusionssperrschicht, ausgebildet sein.

Es ist ferner möglich, ein Wellrohr mit mehreren Behältern gleichen oder unterschiedlichen Querschnitts bzw. unterschiedlicher Länge auszubilden. Entsprechend lassen sich zwischen Behältern auch Wellrohrbereiche gleichen und/oder unterschiedlichen Querschnitts gleicher und/oder unterschiedlicher Wellenform und/oder gleicher oder unterschiedlicher Wandstärke vorsehen, um eine Optimierung in Bezug auf den Zweck der erfindungsgemäßen Struktur zu erzielen. Auch ein Einsatz beispielsweise als Tonerpatrone in Kopierern kann in Betracht gezogen werden.

Die jeweiligen Anschlussbereiche des Behälters bzw. des Wellrohres können auch mit Gewindeabschnitten versehen werden, die gleichermaßen integral bzw. monolithisch vorgesehen sind.

Nachfolgend wird die vorliegende Erfindung anhand von bevorzugten Ausführungsformen näher beschrieben, wobei weitere Merkmale, Zielsetzungen und Vorzüge gemäß der Erfindung offenbart werden. Es zeigen:
- Fig. 1: eine Seitenansicht (rechts) und eine Draufsicht aus Richtung eines Behälters (links) auf eine Ausführungsform gemäß der Erfindung;
- Fig. 2: eine andere Ausführungsform eines erfindungsgemäßen Gegenstandes mit Flanschabschnitt in den Darstellungsperspektiven gemäß der Fig. 1;
- Fig. 3: eine vorletzte Ausführungsform in den Darstellungsperspektiven gemäß Fig. 1; und
- Fig. 4: eine letzte Ausführungsform gemäß der Erfindung in den Ansichten gemäß Fig. 1.

In den Figuren sind gleiche oder wenigsten fünktionsgleiche Bestandteile mit gleichen bzw. entsprechenden Bezugszeichen benannt worden.

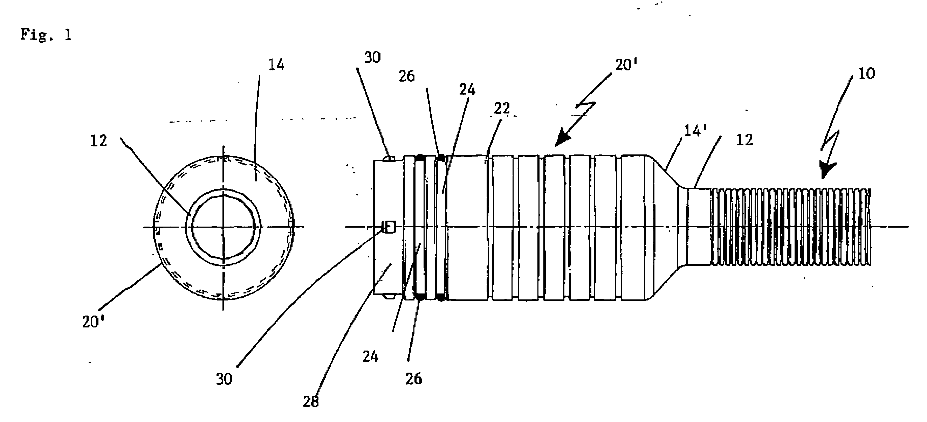

Die Fig. 1 zeigt rechts eine Seitenansicht eines erfindungsgemäßen Gegenstandes mit einem Wellrohrabschnitt 10 und einem Behälterabschnitt 20'. In dem Bereich zwischen dem Wellrohrabschnitt 10 und dem Behälterabschnitt 20' ist ein Übergangsabschnitt 14' vorgesehen, der den Durchmesser bzw. Querschnitt des Wellrohres 10 an den Querschnitt bzw. den Durchmesser des Behälters 20' anpasst. Zwischen dem Übergangsbereich 14' und dem Wellrohrabschnitt 10 kann ein glattwandiger Abschnitt 12 vorgesehen sein, der dazu eingesetzt sein kann, um prozesstechnisch die Langsamlaufphase des Korrugators während der Herstellung einzuleiten, die nötig ist, um den Behälter 20' mit gleicher Wandstärke wie beispielsweise das Rohr 10 oder gar größerer Wandstärke wie das Rohr 10 herzustellen. Dabei wird im Bereich des Behälters mehr Material pro Zeiteinheit für den Korrugationsprozess angeboten als im Bereich des Kunststoffkorrugationswellrohrabschnitts 10. Im Bereich des Übergangsabschnitts 14' kann die Geschwindigkeit des Korrugationsprozesses heruntergefahren werden.

Der Behälter 20' kann mit Stabilisierungsrillen 22 versehen sein. Natürlich kann der Behälter auch vollkommen glattwandig ausgebildet werden, wobei eine Entformung aus dem Formkanal des Korrugators jedoch prozesstechnisch einfacher ablaufen kann, wenn Rillen 22 mit eingearbeitet werden.

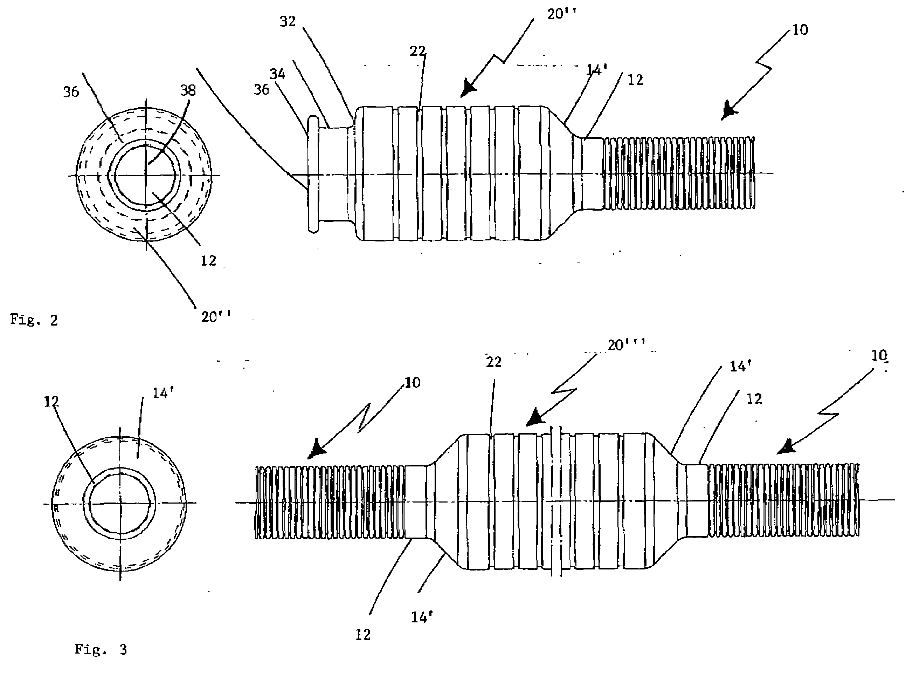

Gemäß Fig. 1 ist gemäß der linken Darstellung zu erkennen, dass der Ausgleichsbehälter 20' hier mit einem runden Querschnitt ausgebildet ist. Im Bereich der Öffnung des Behälters 20' sind zwei O-Ringnuten 24 ausgebildet, in die O-Ringe 26 eingelegt werden können. Ferner sind jenseits der O-Ringe Rastnocken 30 in einem Anschlussbereich 28 des Behälters 20' vorgesehen. Wie gemäß Fig. 1 dargestellt, weist die Ausführungsform gemäß Fig. 2 einerseits ebenfalls einen Behälter 20" mit kreisförmigem Querschnitt auf, wobei abweichend ein Stutzenabschnitt 34 vorgesehen ist, an den ein Flanschabschnitt 36 anschließt. Der Flanschabschnitt weist natürlich eine Öffnung 38 auf, über die Flüssigkeit eingefüllt werden kann bzw. ablaufen kann. Auch hier ist ein Übergangsbereich 32 vorgesehen, der den Durchmesser bzw. Querschnitt des Behälters 20'' an den Durchmesser bzw. Querschnitt des Stutzenabschnittes 34 anpasst.

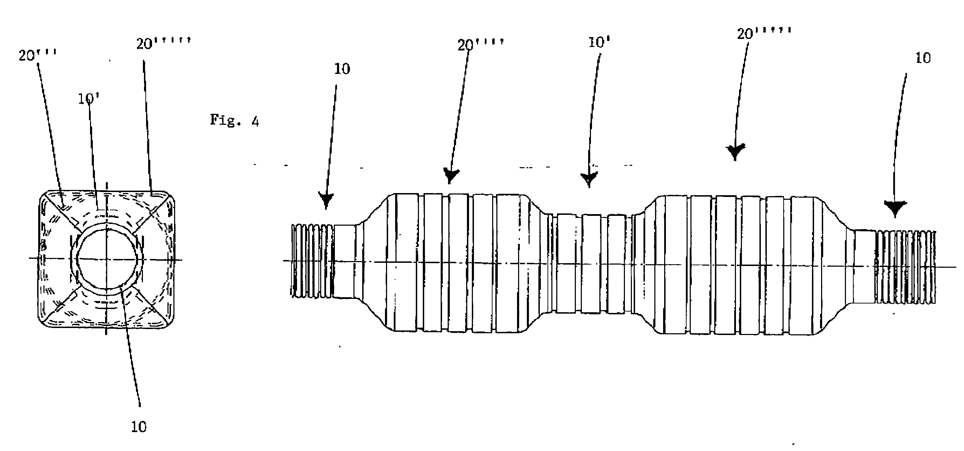

Die Ausführungsform gemäß Fig. 3 weist einerseits einen Behälter mit rundem Querschnitt auf, wobei ferner der Behälter 20''' beidseitig mit Übergangsabschnitten 14' versehen ist, wobei auf beiden Seiten Kwaststoffkorrugationswellrohrabschnitte 10 anschließen.

In Fig. 4 ist eine Struktur mit Merkmalen gemäß der Erfindung zu erkennen, die mehrere Wellrohrabschnitte 10, 10' aufweist. Ferner sind mehrere Behälterabschnitte 20'''', 20''''' vorgesehen. Wie aus der linken Darstellung gemäß Fig. 4 zu erkennen ist, weist der Behälter 20'''' einen runden bzw. kreisförmigen Querschnitt auf. Der Behälter 20''''' weist eine im wesentlichen rechteckige Querschnittsausbildung auf. Das Verbindungsrohr zwischen den beiden Behältern 20'''' und 20''''', das mit dem Bezugszeichen 10' versehen ist, weist einen ovalen Querschnitt auf. Die beiden Kunststoffkorrugationswellrohre 10 diesseits und jenseits der Behälteranordnung sind jeweils mit einem runden Querschnitt ausgebildet. Natürlich werden die verschiedenen Querschnitte und Durchmesser der Bestandteile dieser Struktur wiederum mit hier nicht näher referenzierten Übergangsabschnitten aneinander angepasst und angeschlossen.

## Patentansprüche

1. Einstückige Kunststoffkorrugationswellrohr-Behälter-Anordnung mit Wellenbergen und Wellentälern, wobei ein monolithisch bzw. integral mit dem Wellrohr geformter Behälter mit einer von der Form des Kunststoffkorrugationswellrohres abweichenden Form vorgesehen ist, wobei an beiden Seiten des Behälters ein Wellrohr vorgesehen ist, und
wobei zwischen dem Behälter und den Wellrohren jeweils ein monolithisch bzw. integral aus Kunststoff mitgeformter Übergangsabschnitt vorgesehen ist, der einen kleineren Wellrohrquerschnitt in einen größeren Behälterquerschnitt überführt, wobei der äußere Behälterquerschnitt größer ist, als der größte äußere Wellrohrquerschnitt.

2. Anordnung nach Anspruch 1, wobei der Behälter wenigstens teilweise mit einer starren Wand ausgebildet ist.

3. Anordnung nach Anspruch 1, wobei der Behälter wenigstens teilweise balgartig bzw. wellrohrartig bzw. flexible ausgebildet ist.

4. Anordnung nach Anspruch 1, wobei der Übergangsabschnitt eine Einschnürung umfasst, in der der Querschnitt des Wellrohres unterschritten wird.

5. Anordnung nach Anspruch 1, wobei an einer Seite des Behälters ein Wellrohr mit einer anderen Querschnittsform, Wellungsform und/oder Wanddicke vorgesehen ist, als auf der anderen Seite.

6. Anordnung nach Anspruch 1, wobei der Behälter mehrere Abschnitt mit unterschiedlichen Querschnitten, Wandformen, Wanddicken oder dgl., umfasst.

7. Anordnung nach Anspruch 1, wobei das Wellrohr mit mehren Behältern gleichen oder unterschiedlichen Querschnitts- bzw. gleicher oder unterschiedlicher Länge, bzw. gleicher oder unterschiedlicher Wandstärke ausgebildet ist.

8. Anordnung nach Anspruch 7, wobei zwischen den Behältern Wellrohrbereiche gleichen und/oder unterschiedlichen Querschnitts, gleicher und/oder unterschiedlicher Wellenform sowie gleicher und/oder unterschiedlicher Wandstärke vorgesehen sind.

9. Anordnung nach Anspruch 1, wobei der und/oder die Wellrohrabschnitte mit Anschlussabschnitten mit Gewinde versehen sind.

10. Einstückige Kunststoffkorrugationswellrohr-Behälter-Anordnung mit Wellenbergen und Wellentälern, wobei ein monolithisch oder integral mit dem Wellrohr (10) geformter und zur Verfügung gestellter Behälter (20) mit einer von der Form des Kunststoffkorrugationswellrohres (10) abweichenden Form vorgesehen ist, wobei der Behälter (20) wenigstens teilweise mit einer starren Wand ausgebildet ist, wobei der Behälter auf der der wellrohranschlussseitigen Behälterseite gegenüberliegenden Seite einen Flanschabschnitt (36) mit einer Öffnung (38) aufweist, wobei die Behälterwand außenumfänglich mit Stabilisierungs- und/oder Entformungsrillen (22) versehen ist.

11. Anordnung nach Anspruch 10, wobei zwischen dem Behälter und dem Wellrohr ein monolithisch bzw. integral aus Kunststoff mitgeformter Übergangsabschnitt vorgesehen ist, der den Wellrohrquerschnitt in den Behälterquerschnitt überführt.

12. Anordnung nach Anspruch 10, wobei der Behälter wenigstens teilweise balgartig bzw. wellrohrartig bzw. flexible ausgebildet ist.

13. Anordnung nach Anspruch 10, wobei der Übergangsabschnitt eine Einschnürung umfasst, in der der Querschnitt des Wellrohres unterschritten wird.

14. Anordnung nach Anspruch 11, wobei der Übergangsabschnitt innen eine Dichtfläche umfasst, an die ein Dichtteller zur Anlage bringbar ist.

15. Anordnung nach Anspruch 10, wobei der Behälter nahe der Öffnung wenigstens eine nutartige Struktur aufweist, um eine Dichteinrichtung, etwa einen O-Ring, aufzunehmen.

16. Anordnung nach Anspruch 10, wobei der Behälter mehrere Abschnitt mit unterschiedlichen Querschnitten, Wandformen, Wanddicken oder dgl., umfasst.

17. Anordnung nach Anspruch 10, wobei ein Wellrohr mit mehren Behältern gleichen oder unterschiedlichen Querschnitts- bzw. gleicher oder unterschiedlicher Länge, bzw, gleicher oder unterschiedlicher Wandstärke ausgebildet ist.

18. Anordnung nach Anspruch 17, wobei zwischen den Behältern Wellrohrbereiche gleichen und/oder unterschiedlichen Querschnitts, gleicher und/oder unterschiedlicher Wellenform sowie gleicher und/oder unterschiedlicher Wandstärke vorgesehen sind.

19. Anordnung nach Anspruch 10, wobei der Behälter und/oder der Wellrohrabschnitt mit Anschlussabschnitten mit Gewinde versehen ist.

20. Anordnung nach einem der Ansprüche 1 bis 9, wobei die Behälterwand außenumfänglich mit Stabilisierungs- und/oder Entformungsrillen (22) versehen ist.

21. Verfahren zur Herstellung einer Anordnung nach einem der unabhängigen Ansprüche 1 oder 10, mit den folgenden Merkmale:
- aus einem Extruder wird eine Kunststoffmasse ausgestoßen;
- die Kunststoffmasse wird einem Korrugator zugeführt;
**dadurch gekennzeichnet, dass**
1. der Korrugator zur Herstellung unterschiedlicher Querschnittsbereiche unterschiedlich schnell angetrieben wird, um an unterschiedlichen Querschnittsbereichen entsprechende Wandstärken zu erzeugen, oder
2. zur Herstellung unterschiedlicher Querschnittsbereiche werden vom Extruder unterschiedliche Kunststoffmengen zugeführt, um entsprechende Wandstärken zu erzeugen.

## Claims

1. One-piece corrugated plastic pipe container arrangement with wave crests and wave troughs, wherein a container formed monolithically and/or integrally with the corrugated pipe is provided with a shape which deviates from the shape of the corrugated plastic pipe, wherein a corrugated pipe is provided on both sides of the container, and
wherein between the container and the corrugated pipes in each case there is provided a transition section formed monolithically and/or integrally therewith from plastic, said transition section moving from a smaller corrugated pipe cross-section to a larger container cross-section, wherein the outer container cross-section is larger than the largest outer corrugated pipe cross-section.

2. Arrangement according to Claim 1, wherein the container is at least partially formed with a rigid wall.

3. Arrangement according to Claim 1, wherein the container is at least partially formed bellow-like or corrugated pipe-like or flexible.

4. Arrangement according to Claim 1, wherein the transition section encompasses a throat in which the cross-section of the corrugated pipe is not reached.

5. Arrangement according to Claim 1, wherein a corrugated pipe with a cross-sectional shape, wave shape and/or wall thickness other than that on the other side is provided on one side of the container.

6. Arrangement according to Claim 1, wherein the container encompasses several sections with various cross-sections, wall shapes, wall thicknesses or the like.

7. Arrangement according to Claim 1, wherein the corrugated pipe is formed with several containers with the same or a different cross-section and/or the same or a different length and/or the same or a different wall thickness.

8. Arrangement according to Claim 7, wherein between the containers corrugated pipe regions with the same or a different cross-section, the same and/or a different wave shape as well as the same and/or a different wall thickness are provided.

9. Arrangement according to Claim 1, wherein the corrugated pipe section(s) is/are provided with threaded connection sections.

10. One-piece corrugated plastic pipe container arrangement with wave crests and wave troughs, wherein a container (20) formed and made available monolithically or integrally with the corrugated pipe (10) is provided with a shape which deviates from the shape of the corrugated plastic pipe (10), wherein the container (20) is at least partially formed with a rigid wall, wherein the container on the side of the container opposite the corrugated pipe connection has a flange section (36) with an opening (38), wherein the container wall is provided on its outer circumference with stabilisation and/or demoulding grooves (22).

11. Arrangement according to Claim 10, wherein a transition section formed monolithically or integrally therewith from plastic is provided between the container and the corrugated pipe, said transition section moving from the corrugated pipe cross-section to the container cross-section.

12. Arrangement according to Claim 10, wherein the container is at least partially formed bellow-like or corrugated pipe-like or flexible.

13. Arrangement according to Claim 10, wherein the transition section encompasses a throat in which the cross-section of the corrugated pipe is not reached.

14. Arrangement according to Claim 11, wherein the transition section has a sealing surface on the inside, wherein a sealing plate can be moved against said sealing surface.

15. Arrangement according to Claim 10, wherein the container has at least one groove-like structure close to the opening in order to accommodate a sealing device such as an O-ring.

16. Arrangement according to Claim 10, wherein the container encompasses several sections with various cross-sections, wall shapes, wall thicknesses or the like.

17. Arrangement according to Claim 10, wherein a corrugated pipe is formed with several containers with the same or a different cross-section and/or the same or a different length and/or the same or a different wall thickness.

18. Arrangement according to Claim 17, wherein corrugated pipe regions with the same or a different cross-section, the same and/or a different wave shape as well as the same and/or a different wall thickness are provided between the containers.

19. Arrangement according to Claim 10, wherein the container and/or the corrugated pipe section is/are provided with threaded connection sections.

20. Arrangement according to one of Claims 1 to 9, wherein the container wall is provided on its outer circumference with stabilisation and/or demoulding grooves (22).

21. Method of producing an arrangement according to one of independent Claims 1 or 10, with the following features:
- a plastic mass is extruded from an extruder;
- the plastic mass is supplied to a corrugator;
**characterised in that**
1. the corrugator is driven at different speeds to produce different cross-sectional regions in order to generate wall thicknesses corresponding to various cross-sectional regions,
or
2. varying quantities of plastic are supplied by the extruder for the production of different cross-sectional regions in order to generate corresponding wall thicknesses.

## Revendications

1. Agencement monolithique en matière synthétique de tuyau ondulé et de récipient doté de sommets d'ondulation et de creux d'ondulation, dans lequel un récipient formé de façon monolithique ou, respectivement, solidaire avec le tuyau est prévu avec une forme s'écartant de la forme du tuyau ondulé en matière synthétique, un tuyau ondulé étant prévu des deux côtés du récipient,
dans lequel une section de transition en matière synthétique formée en même temps de façon monolithique ou, respectivement, solidaire est prévue respectivement entre le récipient et les tuyaux ondulés, faisant la transition entre une plus petite section transversale de tuyau ondulé et une section transversale plus importante du récipient, la section transversale externe du récipient étant plus grande que la plus grande section transversale externe du tuyau ondulé.

2. Agencement selon la revendication 1, le récipient étant conçu au moins partiellement avec une paroi rigide.

3. Agencement selon la revendication 1, le récipient étant conçu au moins partiellement avec des soufflets ou, respectivement, des tuyaux ondulés ou, respectivement, des tuyaux souples.

4. Agencement selon la revendication 1, la section de transition comprenant un étranglement, dans lequel la section transversale du tuyau ondulé n'est pas atteinte.

5. Agencement selon la revendication 1, un tuyau ondulé étant prévu sur un côté du récipient avec une forme de section transversale, une forme d'ondulation ou, respectivement, une épaisseur de paroi différentes de celles de l'autre côté.

6. Agencement selon la revendication 1, le récipient comprenant plusieurs parties avec des sections transversales, des formes de paroi, des épaisseurs de paroi ou semblables différentes.

7. Agencement selon la revendication 1, le tuyau ondulé étant conçu avec plusieurs récipients ayant une section transversale identique ou différente ou, respectivement, une longueur identique ou différente ou, respectivement, une épaisseur de paroi identique ou différente.

8. Agencement selon la revendication 7, dans lequel des zones de tuyau ondulé de section transversale identique ou respectivement, différente, de forme d'ondulation identique ou respectivement, différente, ainsi que d'épaisseur de paroi identique ou, respectivement différente sont prévues entre les récipients.

9. Agencement selon la revendication 1, la/les partie(s) de tuyau ondulé étant dotée(s) de sections de raccordement avec un filetage.

10. Agencement monolithique en matière synthétique de tuyau ondulé et de récipient doté de sommets d'ondulation et de creux d'ondulation, dans lequel un récipient (20) formé monolithique ou solidaire avec le tuyau ondulé (10) et mis à disposition est muni d'une forme s'écartant de la forme du tuyau ondulé en matière synthétique (10), le récipient (20) étant constitué au moins partiellement d'une paroi rigide, le récipient présentant, sur son côté opposé au côté de raccordement au tuyau ondulé, une section de bride (36) avec une ouverture (38), la paroi du récipient étant dotée sur sa circonférence extérieure de rainures de stabilisation ou, respectivement, de démoulage (22).

11. Agencement selon la revendication 10, dans lequel une section de transition formée en même temps de manière monolithique ou solidaire en matière synthétique est prévue entre le récipient et le tuyau ondulé, faisant la transition entre la section transversale du tuyau ondulé et la section transversale du récipient.

12. Agencement selon la revendication 10, le récipient étant constitué au moins partiellement de soufflets ou, respectivement, de tuyaux ondulés ou, respectivement, de tuyaux souples.

13. Agencement selon la revendication 10, la section de transition comprenant un étranglement, dans lequel la coupe transversale du tuyau ondulé n'est pas atteinte.

14. Agencement selon la revendication 11, la section de transition comprenant à l'intérieur une surface d'étanchéité, sur laquelle un disque d'étanchéité peut être mis en butée.

15. Agencement selon la revendication 10, le récipient présentant à proximité de l'ouverture au moins une structure rainurée, afin d'y loger un dispositif d'étanchéité, par exemple un joint torique.

16. Agencement selon la revendication 10, le récipient comprenant plusieurs parties avec des sections transversales, de formes de paroi, des épaisseurs de paroi et semblables différentes.

17. Agencement selon la revendication 10, un tuyau ondulé étant constitué avec plusieurs récipients de section transversale identique ou différente ou, respectivement, de longueur identique ou différente ou, respectivement, d'épaisseur de paroi identique ou différente.

18. Agencement selon la revendication 17, des zones de tuyau ondulé de section transversale identique ou, respectivement, différente, de forme d'ondulation identique ou, respectivement, différente ainsi que d'épaisseur de paroi identique ou différente étant prévues entre les récipients.

19. Agencement selon la revendication 10, le récipient ou, respectivement, la section de tuyau ondulé étant dotée de sections de raccordement avec filet.

20. Agencement selon l'une quelconque des revendications 1 à 9, la paroi du récipient étant dotée sur sa circonférence externe de rainures de stabilisation ou, respectivement, de démoulage (22).

21. Procédé de fabrication d'un agencement selon l'une quelconque des revendications indépendantes 1 ou 10, ayant les caractéristiques suivantes :
- une masse de matière synthétique est expulsée d'une extrudeuse;
- la masse de matière synthétique est amenée vers une onduleuse ;
**caractérisé en ce que** :
1 l'onduleuse est entraînée à des vitesses différentes pour fabriquer des zones de section transversale différentes, afin de produire au niveau des différentes zones de section transversale des épaisseurs de paroi correspondantes ; ou
2 afin de fabriquer des zones de section transversale différentes, des quantités de matière synthétique différentes sont amenées depuis l'extrudeuse pour produire des épaisseurs de paroi correspondantes.
